# EUROPEAN PATENT APPLICATION

(11) **EP 2 355 538 A1**
(43) Date of publication of application: **10.08.2011**
(21) Application number: 10152340.5
(22) Date of filing: 01.02.2010
(51) Int. Cl.: H04Q 9/00

(54) **System for monitoring a building for the presence of vermin and/or wood degrading circumstances**

(71) Applicant: Bisseling, Jacobus Petrux Johannes, 5421 EV Gemert (NL)
(72) Inventor: Bisseling, Jacobus Petrux Johannes, 5421 EV Gemert (NL)
(74) Representative: Verhees, Godefridus Josephus Maria

(57) **Abstract**

A system for monitoring a building for the presence of vermin and/or wood degrading circumstances, for example wood boring insects, has a plurality of sensors 1, 3 which are installed at various locations on wood structures 5, 7 in buildings 9, 11. Each sensor 1, 3 comprises a transmitter which is connected in wireless manner to a transceiver 13, 15 which forms part of the system.

This transceiver 13, 15 receives the signals coming from the sensors 1, 3, converts them into GSM signals and subsequently transmits them via the GSM network 17. The system further includes a processing unit 19 for processing the measured signals from the sensors. This processing unit 19 is coupled to a GSM receiver 21 through which the signals are received coming from the transceivers 13, 15.

## Description

### Field of the invention.

The invention relates to a system for monitoring a building for the presence of vermin and/or wood-degrading circumstances, comprising a plurality of sensors which can be positioned at various locations in the building and which may be coupled to a processing unit which is capable of processing the measured signals originating from the sensors. Wood-degrading circumstances may be understood to mean, for example, the presence of wood-boring insects in the wood and/or the presence of rodents in the wood structure and/or the moisture content of the wood.

### State of the art

A system of this type is known from US 5.199.065. This known system is intended for detecting the presence of termites in a wood structure of a building. In this known system the sensors are connected by a cable to each other and to the processing unit. For the monitoring the data of the processing unit are to be read out on location.

### Summary of the invention.

It is an object of the invention to provide a system of the type defined in the opening paragraph with which a building can be monitored in a simpler manner than with the known system. For this purpose the system according to the invention is characterised in that each sensor is provided with a transmitter and the system comprises a transceiver which can receive the signals coming from the sensors and can convert them into a signal which can then be transmitted in a wireless or wired manner, which system further comprises a signal receiver which is coupled to the processing unit. The signal may be for example a GSM signal. In that case the signal receiver is a GSM receiver. In lieu of wireless signal transmission the signal can also be transmitted to the signal receiver via the Internet. By transmitting the measured signals to the processing unit via the GSM network it is possible for one or more wood structures to be monitored from a location remote from the wood structure(s). As a result, it is not necessary to monitor the wood structure at the location of that very wood structure. In addition, in that case the sensors need not be connected to each other and to the processing unit via a cable, so that sensors can be installed at places which are hard to reach.

An embodiment of the system according to the invention is characterised in that each sensor is further provided with a receiver which can receive signals from the other sensors, with the sensor also being capable of transmitting the signals received from the other sensors in addition to its own measured signal. In consequence, it is not necessary for all sensors to come into contact in wireless manner with the transceiver so that they can be installed more remote from the transceiver. The communication among the sensors could for example take place by the implementation of a known wireless communication standard such as 'Zigbee' suitable for this purpose.

The sensors preferably comprise motion sensors. With them it is possible to detect the presence of mice, rats and other vermin in a building.

At least a plurality of sensors are preferably positioned on mouse traps and/or rat traps. As a result, there can be noticed from a distance whether, and if so which traps have started to operate, so that not all contraptions placed in the building need be checked.

Furthermore, the sensors preferably comprise sensors which are to be installed on and/or in a wood structure of the building, for detecting the presence of wood-degrading circumstances in the wood structure. These sensors are for example sensors that are capable of measuring the moisture content in the ambient air or in the wood structure, or sensors that are capable of detecting forces or vibrations in the wood strcuture which are caused by wood boring insects or rodents.

### Brief description of the drawings

The invention will be further described below in more detail with reference to an embodiment of the system according to the invention and represented in the drawing figures, in which:
Fig. 1 shows a first embodiment of the system according to the invention; and
Fig. 2 shows a second embodiment of the system according to the invention.

### Detailed description of the drawings

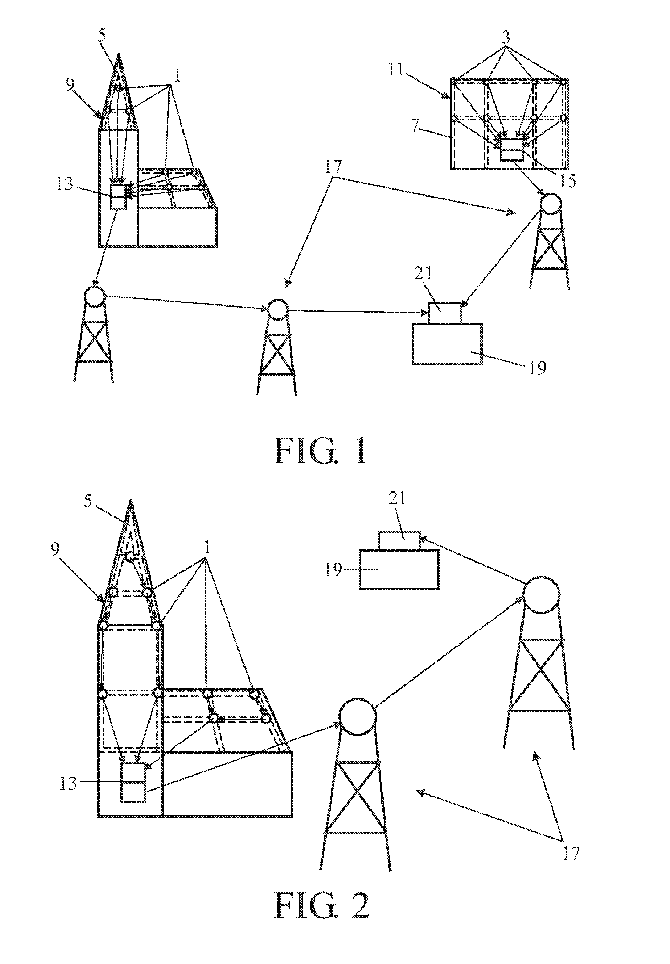

Fig. 1 shows a first embodiment of the system according to the invention for monitoring a wood structure for the presence of wood boring insects. The system has a plurality of sensors 1, 3 which are installed at various locations on wood structures 5, 7 in buildings 9, 11. Each sensor 1, 3 comprises a transmitter which is wirelessly connected to a transceiver 13, 15 which forms part of the system.

This transceiver 13, 15 receives the signals originating from the sensors 1, 3, converts them into GSM signals and subsequently transmits them via the GSM network 17. The system further includes a processing unit 19 for processing the measured signals from the sensors. This processing unit 19 is coupled to a GSM receiver 21 through which the signals are received coming from the transceivers 13, 15.

Fig. 2 shows a second embodiment of the system according to the invention. All component parts which are equal to those of the system shown in Fig. 1 are referenced with like reference numerals. This system differs from the system shown in Fig. 1 in that each sensor 1 additionally includes a receiver which can receive signals from other sensors, while the sensor, besides transmitting its own measured signals, also transmits signals received from the other sensors. These signals can be received by yet another sensor or the transceiver 13.

Albeit the invention has been described in the foregoing based on the drawing figures, it should be observed that the invention is not by any manner or means restricted to the embodiment shown in the drawing figures. The invention also extends to all embodiments deviating from the embodiments shown in the drawing figures within the spirit and scope defined by the claims. For example, it is possible to install beside or in lieu of said sensors other sensors in the buildings to monitor for example the presence of vermin in the buildings or the moisture content in the buildings or in wood structures of the buildings.

## Claims

1. A system for monitoring a building for the presence of vermin and/or wood-degrading circumstances, comprising a plurality of sensors which can be positioned at various locations in the building and which may be coupled to a processing unit which is capable of processing the measured signals originating from the sensors, **characterised in that** each sensor is provided with a transmitter and the system comprises a transceiver which can receive the signals coming from the sensors and can convert them into signals which can then be transmitted in a wireless or wired manner, which system further comprises a signal receiver which is coupled to the processing unit.

2. A system as claimed in claim 1, **characterised in that** each sensor is further provided with a receiver which can receive signals from the other sensors, with the sensor also being capable of transmitting the signals received from the other sensors in addition to its own measured signal.

3. A system as claimed in claim 1 or 2, **characterised in that** the sensors comprise motion sensors.

4. A system as claimed in claim 3, **characterised in that** a plurality of the sensors are present on mouse traps and/or rat traps.

5. A system as claimed in any one of the preceding claims, **characterised in that** the sensors comprise sensors which are to be installed on and/or in a wood structure of the building, for detecting the presence of wood-degrading circumstances in the wood structure.
